Europäisches Patentamt

European Patent Office

Office européen des brevets

(11) Publication number: **0 296 649**
**A1**

## (12) EUROPEAN PATENT APPLICATION

(21) Application number: **88200956.6**

(22) Date of filing: **11.05.88**

(51) Int. Cl.4: **G05B 19/18 , G06F 15/20 , G06F 15/60**

The title of the invention has been amended (Guidelines for Examination in the EPO, A-III, 7.3).

(30) Priority: **12.06.87 NL 8701382**
**25.09.87 NL 8702304**

(43) Date of publication of application:
**28.12.88 Bulletin 88/52**

(84) Designated Contracting States:
**AT BE CH DE ES FR GB GR IT LI LU NL SE**

(71) Applicant: **WERKSPOOR SNEEK B.V.**
**Kamerlingh Onnesstraat 21**
**NL-8606 JN Sneek(NL)**

(72) Inventor: **Potjes, Theodorus Adrianus Antonius**
**No. 2, De Leyen**
**NL-8604 CE Sneek(NL)**

(74) Representative: **'t Jong, Bastiaan Jacobus et al**
**OCTROOIBUREAU ARNOLD & SIEDSMA**
**Sweelinckplein 1**
**NL-2517 GK 's-Gravenhage(NL)**

(54) **Method and device for clamping a semi-manufacture onto the work surface of a machining device for machining it.**

(57) Method for clamping a partially finished product onto a fixation surface of a machining device for machining it into a finished product, comprising:
- determining of the required operations, starting from the working drawing of the product;
- determining of the relationships of the machining directions of the particular machining device, whereby each relationship is the mutual relation of the machining directions possible with the machining device in one fixation position at a time relative to the fixation surface;
- determining hereby of the fixations necessary for performing the machining operations;
- designing of a fixture for each fixation; and
- subsequent arrangement for each fixation of the fixture on the fixation surface and the clamping of the partially finished product on said fixture.

FIG.1

EP 0 296 649 A1

## METHOD AND DEVICE FOR FIXING A SEMI-MANUFACTURE ONTO A FIXATION SURFACE OF A MACHINING DEVICE FOR MACHINING INTO A PRODUCT.

The invention relates to the phase in the machining of a product generally described as "work preparation". With a working drawing as point of departure decisions are made in this work preparation as to how a semi-manufacture must be clamped in position in order to be able to perform thereon the necessary machining operations as efficiently as possible. It is particularly desirable to perform the required operations in the minimum number of fixations, since for each fixation a fixture has to be manufactured which must then be fitted on the machining device. Thus attached to each fixation are the costs of the fixture and the cost of resetting the machining device.

The work preparation comprises the following steps:
- determining of the required operations, starting from the working drawing of the product;
- determining of the relationships of the machining directions of the particular machining device, whereby each relationship is the mutual relation of the machining directions possible with the machining device in one fixation position at a time, relative to the fixation surface;
- determining hereby of the fixations necessary for performing the machining operations;
- designing of a fixture for each fixation;
- subsequent arrangement for each fixation of the fixture on the fixation surface and the clamping of the semi-manufacture on the fixture.

The relationships of the machining directions can differ for each type of machining device and may be seen as the mutual relation of the possible machining directions in one fixation position.

Using the invention the work preparation, which up to the current time has been totally dependent on the skilled knowledge of a work preparer, can be performed in a structured manner such that it can be carried out in large measure with the use of a computer.

The method according to the invention comprises for determining the necessary fixation positions:
- the characterizing of the geometric elements of the product essential for the machinings, using the working drawing as starting point;
- the determining with respect to the product of the machining directions of the operations associated with the elements;
- the establishing of the positional relationships and form relationships between pairs of geometric elements whereby each pair comprises a reference element and an element dependent thereon in accordance with the relationship;
- the establishing of the tolerances of the relationships;
- the grouping of elements of which the relationships have the most critical tolerances and in so far as the differing machining directions thereof are consistent in each case with a relationship of the machining directions of the machining device;
- the addition to each group of elements with compatible machining directions;
- whereby each resulting group is related to one fixation position, such that the operations associated with the elements of one group can be performed in one fixation.

Hereby achieved is that the semi-manufacture can be clamped such that the most critical operations are performed in one fixation. Furthermore, a minimum number of fixations is specified.

In accordance with a preferred embodiment of the method according to the invention the grouping of the elements comprises:
- the ordering of the pairs of elements in accordance with decreasing criticality of the tolerance of their relationship;
- the initial inclusion in a separate group of each pair, and subsequently,
- the addition, in the order sequence, of a following group to a preceding group if the element of a pair in the following group that represents the reference element already forms part of the preceding group and the combination of the machining directions of the operations associated with the elements in the preceding and the following group is compatible with a relationship of the machining directions of the machining device;
- the removal, in the case the following group is not added to the preceding group by reason of incompatibility of the machining directions, from the following group of the relevant reference element and the characterizing of the following group as dependent group, that is, as group dependent on the relevant reference element;
- the combining of dependent groups of which the reference elements form part of the same group, if the combination of the machining directions of the operations associated with the elements of these dependent groups is compatible with a relationship of the machining directions of the machining device;
- whereby each reference element on which a dependent group is dependent serves as positioning element in the fixation to which this dependent group is related.

Since it is difficult to assess the variously occurring form, dimensional and positional tolerances on their mutual criticality, a further development of the invention is preferably applied which is distinguished in that prior to the grouping of the elements the tolerance of each relationship is transformed into the maximum permissible error angle between the nominal machining directions of the operations associated with the elements of the pair, thereby remaining just within the tolerance. The determining of the error angle can be carried out using known mathematical techniques, whereby the Netherlands norm NEN 3310 Form and Positional tolerances, Definitions may serve as guideline. This Dutch norm is drawn from the document ISO/TC10-drawings, General principles, of the International Organization for Standardization (ISO).

The invention also relates to and provides a device for performing the method. This device comprises a per se known computer with input means for input of data of the geometric elements, a program memory containing a program for determining with the above described method of the required fixation positions, output means for output of data representing the necessary fixation positions, means for manufacturing a fixture with this data and means for arranging the fixture on a fixation surface of a machining device and the fixation of a semi-manufacture on the fixture. The software can be assembled such that entered therein are the characteristics of the geometric elements, for instance as numeric characters, and the data relating to positional relationships, form relationships and the tolerances thereof. In a manner that is further self-evident for one skilled in the art the different fixation positions with the relevant clamping members can then be generated as output.

In a further development of the invention the means for manufacturing a fixture comprise: a fixation plate to be arranged on the fixation surface and having a matrix of mounting holes and a collection of clamping members which can be assembled into fixture parts and mounted on the fixation plate, whereby the computer memory contains a data file of the clamping members and a sub-program that carries out via the output means an instruction containing the clamping members to be arranged per position of the hole matrix.

The software can of course also be further developed such that in addition to the assembly of the fixtures the programming of the machining device associated with the different fixations is also performed.

When the collection of clamping members contains machinable members that after mounting of the fixture on the fixation surface are machined to the required size by the machining device, a very accurate fixture can be obtained in a simple manner. In this preferred embodiment the collection of clamping members can moreover be relatively limited, since only the machinable members with a considerable tolerance require mounting on the necessary position, and the definitive position of the positioning surfaces are determined with great accuracy by the machining operation.

The system preferably takes an interactive form so that during computing particular operations may be carried out. Thus for example can be indicated which relationships display a mutual relation during the relevant machinings. So for instance a number of relationships play a part in the drilling of a hole. Some that could be mentioned are the positional relationships for the center line of the hole for drilling, the depth of the hole and form relationships such as parallelism of the center line etc.

The method and device according to the invention are particularly suitable for combining with per se known CAD/CAM systems.

The invention will be further elucidated with reference to the annexed figures and tables.

Figure 1 and 2 show respectively a view and a section of a working drawing of a pump housing.
Table 1 is a table in which are shown the geometric elements of the pump housing from figures 1 and 2.
Table 2 is a table of the relationships between pairs of geometric elements.
Figure 3 is a graphic representation of table 2.
Figure 4 elucidates by way of example the transformation of a dimensional tolerance into an error angle.
Figure 5 is a graphic representation of the grouping of the elements.
Figure 6 shows in perspective view the pump housing clamped on the fixation surface of a machining device.

The invention for fixing onto a fixation surface of a machining device of a casting for machining into a pump housing takes as starting point the working drawing of the product. This working drawing may be two-dimensional and consist of a number of views on a sheet of paper, or be stored three-dimensionally in a computer memory. The latter will particularly be the case when the invention is applied in combination with a CAD/CAM system.

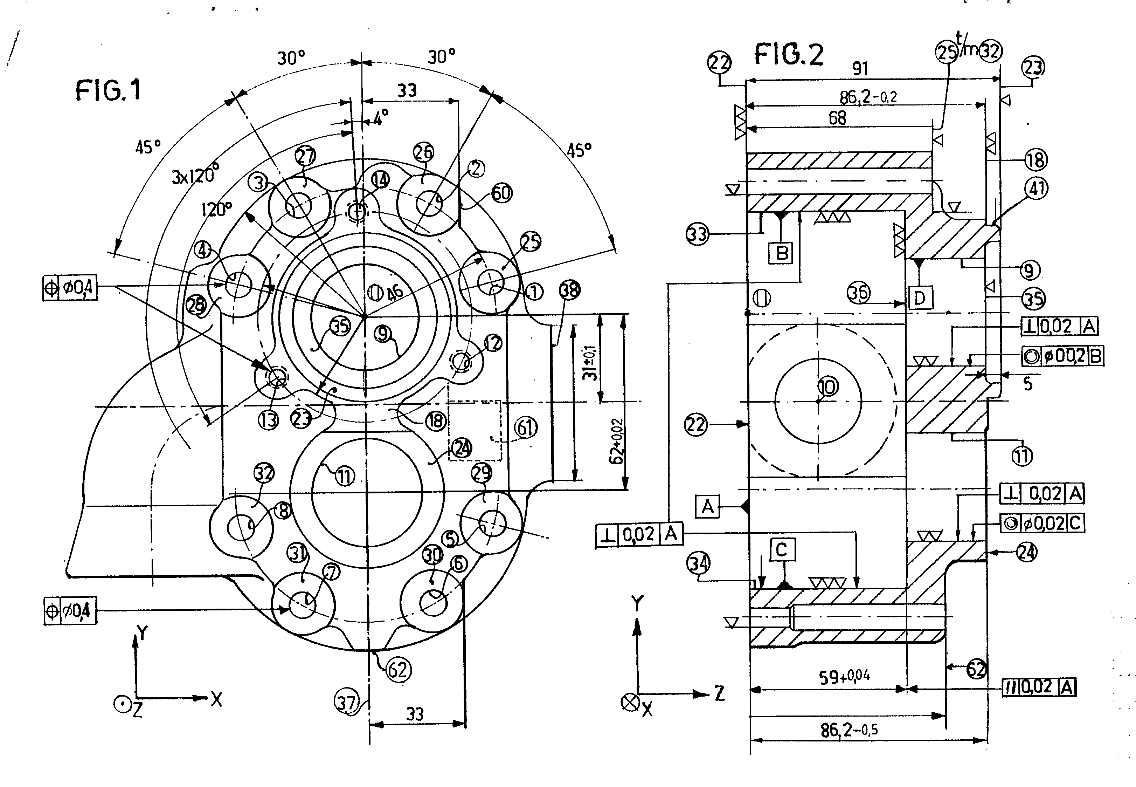

In order to explain the method it is sufficient to describe the two views of figures 1 and 2. A working

3

drawing for such a pump housing will in fact comprise move views.

Omitted in the two views are the dimensions and/or tolerances that are tool-dependent or which are casting dimensions. The tool-dependent dimensions are for instance the diameters of the holes to be drilled.

In a first phase of the use of the invention the geometric elements of the product essential for the machining operations are characterized. In figures 1 and 2 these geometric elements are characterized by a circled number.

The geometric elements are then set out in a geometric table. For this purpose a coordinate system fixed relative to the workpiece is first selected. Indicated in the figures 1 and 2 are the source O of the coordinate system and the positive X, Y and Z directions. Included in the geometric table are the coordinates of the fixation point of each surface. This fixation point may be seen as the starting or end point of the relevant surface. The measurements of the relevant surface are further indicated in the columns "length/axis" and "width/radius". Shown in the last column are the possible machining directions of the operation associated with each element.

The geometric elements taken up in table 1 are the following:
- bolt holes 1-8, shaft holes 9 and 11, pump outlet channel 10, screw thread holes around the uppermost shaft hole 12-14. Indicated with 18, 23 and 24 are three end wall faces. The lower face against which a cover will eventually be mounted for sealing of the pump chambers is shown by 22. The end faces round the bolt holes 1-8 are indicated with 25-32. The cylindrical faces of the pump chamber and the faces concentric to shaft holes 9 and 11 are designated by 33 and 34 respectively. The end wall of the pump chamber is indicated with 36. The numeral 37 designates the plane of symmetry of the pump housing. This latter plane is of course not a surface that is to be machined, but is used in showing dimensions, so that it will appear in the dimensional relationship table to be discussed later.

The end face of the pump outlet is indicated with 38. Casting surfaces relative to which surfaces for machining are indicated are the surfaces 60, 61 and 62. Finally, the space inside which the whole pump housing lies is defined in the geometric table with number 100.

Shown in the second column of the geometric table is the type of surface concerned. The type designations have the following meaning. BC relates to a cylindrical machining, such as for instance a hole for drilling. In the case of such a type of face the axis length and the radius are noted respectively in the fourth and fifth columns. A screw thread hole is indicated with the type BS. BV relates to a two-dimensional straight face. SV stands for plane of symmetry and in table 1 the plane 37 is of this type. The rough surfaces 60-62 are shown by RV. Finally, the block around the workpiece is designated WB. As noted this is shown with face 100 in the table.

In addition to the geometric table, which may be seen as a summary of the operations to be performed, a dimensional relationship table is compiled. This is shown in table 2. Included on each line of this table is a pair of elements with a determined relationship. In each relationship one element is the reference element, the element named "Ref." in the third column, and an element dependent thereon according to the relationship which is named "Dep."in the second column. Shown in the fourth column is the type of tolerance. PL stands for positional tolerance, CC indicates concentricity, HA stands for perpendicularity, EV for parallelism, and MA for linear dimensional tolerance.

Thus in line 1 is given the relationship between bolt hole 1 and the cylindrical pump housing surface 33. These are both elements of the type "BC" which is characterized by a centre line, so that the positional relationship relates to the distance between both these centre lines. The dimension and tolerance stated in the columns 5 and 6 can be read directly from the drawing. The second line gives a relationship between the same bolt hole 1 and the plane of symmetry 37. Laid down in the system is that two successive lines in the table are associated with a relationship of the type PL (positional tolerance). The first and second lines therefore give the tolerance of the type PL for bolt hole 1.

Only the tolerances are of course shown for the concentricity, perpendicularity and parallelism.

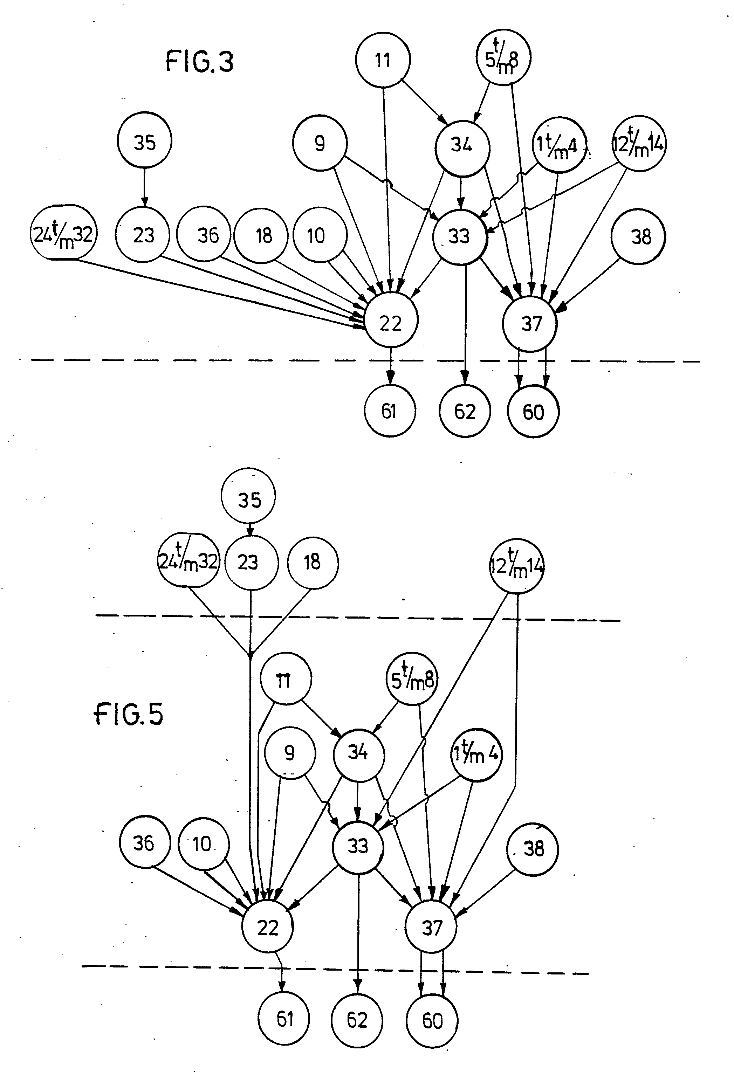

Figure 3 gives a graphic representation of table 2. The elements are again indicated with their number, while the relationship is designated with an arrow. The point of the arrow points to the reference element of the relationship. Shown above the dashed line are the faces to be machined, while under the dashed line are the rough surfaces. Much is already clear in this graphic representation with respect to the operating sequence. It will thus only be possible to machine many faces after the faces 22 and 33 have been machined.

It is noted that surface 37, which as will be apparent from figure 3 is of importance for the machining of other surfaces, is a plane of symmetry and is therefore not machined. In practice the positioning function of the plane of symmetry 37 is taken over by the rough surface 60.

In order to now determine how the casting must be clamped in order to be machined, it must first be established what the possibilities are of the machining device on which these operations have to be performed. That which must particularly be determined is which machining directions can be performed in one fixation. When the machining device is for example a numerically controlled machining centre whereby the workpiece can be clamped onto a rotary table and whereby the tool axis extends parallel to the plane of the rotary table, end face machinings can be performed on a clamped workpiece on four sides. The relationships of the machining directions of this machining device may thus be designated with a two-dimensional axial cross with positive and negative directions for both axes. When the workpiece is clamped onto an angle plate on the rotary table, as shown in figure 6, operations can be performed from three sides. The relationship of the machining directions can thus be represented in this case by a two-dimensional axial cross whereby one axis has both a positive and a negative direction and the other axis has only a positive direction. In this way different relationships of the machining directions can be defined for different machining devices and different fixation possibilities.

In accordance with the invention those elements of which the relationships have the most critical tolerances and in so far as the different machining directions thereof are compatible with a relationship of the machining directions of the machining device concerned are now brought together in a group. As soon as this grouping is completed, the required fixations are in fact determined, since each group corresponds with a fixation position.

When for instance a workpiece has to machined with a numerically controlled machining centre as described above, whereby the fixation surface is located on an angle plate arranged on a rotary plate, the relationship of the machining directions of the machining device can be characterized by a two-dimensional coordinate system having one axis with a positive and a negative direction and a second axis having only a positive direction. When now the two elements of the pair with the most critical tolerance have machining directions which can be designated with respect to the workpiece by $+X$ and $+Z$, the workpiece can be clamped in two different positions such that the associated operations can be carried out in the same fixation. Suppose now that the reference element with the next most critical tolerance already formed part of the first pair, and that the dependent element of this second pair has a machining direction -X, only one fixation is then still possible in which the three elements concerned can be machined in one operation. This fixation is therefore determined.

It will be apparent that, if the dependent element of the second pair had had a machining direction of for example $+Z$, this operation could not be performed in one fixation with the machining of the first two elements, and that a second fixation would have been necessary. To each group formed by the elements of the pairs with the relationship having the most critical tolerances are added those elements having compatible machining directions. All elements are thus eventually grouped, whereby each resulting group is related to one fixation position such that the operations associated with the elements of one group can be carried out in one fixation.

As remarked earlier, the invention is particularly suited to being performed with the use of a computer. Thereby applied in accordance with the invention for the grouping of the elements is an algorithm comprising:
- the ordering of the pairs of elements in accordance with diminishing criticality of the tolerance of their relationship;
- the initial inclusion in a separate group of each pair and subsequent thereto,
- the addition in the order sequence of a following group to a preceding group if the element of a pair in the following group that represents the reference element already forms part of the preceding group and the combination of the machining directions of the operations associated with the elements in the preceding and the following group is compatible with a relationship of the machining directions of the machining device;
- the removal, in the case the following group is not added to the preceding group by reason of incompatibility of the machining directions, from the following group of the relevant reference element and the characterizing of the following group as dependent group, that is, as group dependent on the relevant reference element;
- the combining of dependent groups of which the reference elements form part of the same group, if the combination of the machining directions of the operations associated with the elements of these dependent groups is compatible with a relationship of the machining directions of the machining device.

After the input of the data as shown in the tables 1 and 2 the computer can in this manner determine the required fixations with the program. Each reference element on which a dependent group is dependent moreover serves as positioning element in the fixation to which this dependent group is related.

For the determining of the criticality of the tolerances different criteria can be applied. In the case of the preferred embodiment described here the tolerance of each relationship is first transformed into the maximum permissible error angle between the nominal machining directions of the operations associated with the elements of the pair, thereby remaining just within the tolerance. The tolerance of a relationship between a reference element and an element dependent thereon defines a space inside which the dependent element must be located to remain within tolerance. These spaces are defined for the various form and positional tolerances in the above mentioned Netherlands standard NEN 3310. This standard is considered as inserted herein.

The dependent element may extend at an angle in the tolerance space or zone relative to the nominal direction determined by the reference element, and may remain wholly within this tolerance space or zone. The maximum angle at which the dependent element can extend while still remaining within this tolerance space or zone, irrespective of the direction of the angle relative to the tolerance space, is the maximum permissible error angle. This maximum permissible error angle can be calculated for each relationship using known mathematical methods and making use of the data as included in table 1 and table 2.

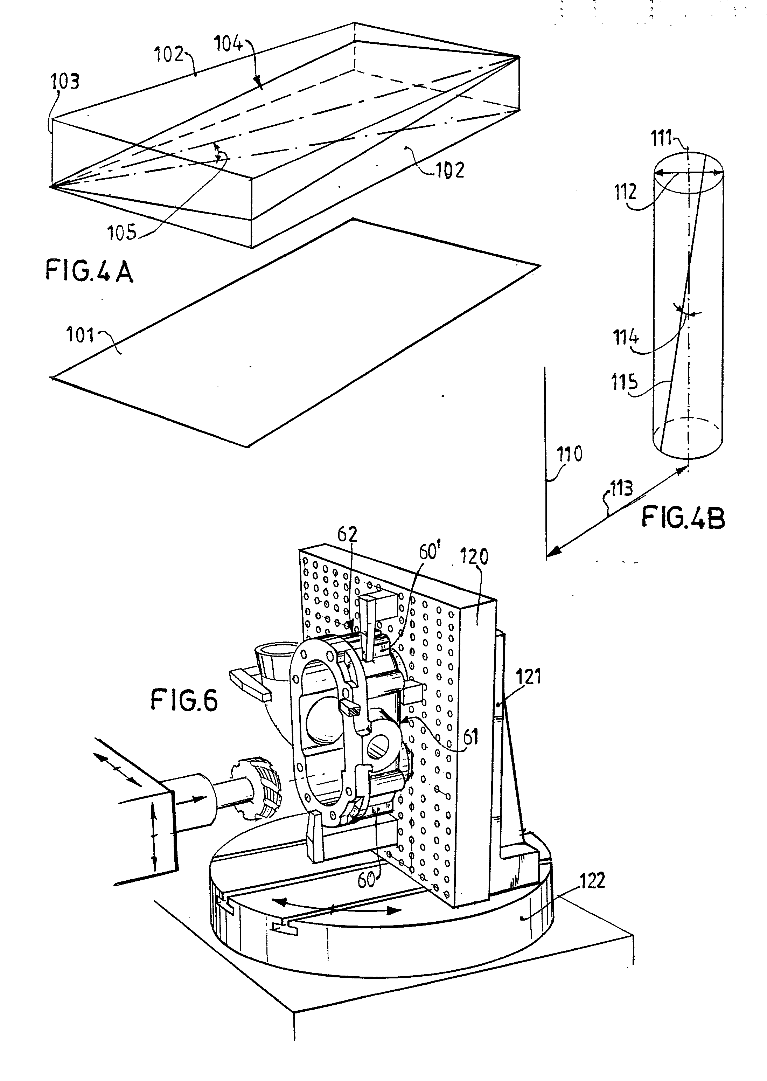

Shown by way of explanation in figure 4a is the maximum permissible error angle in the case of a tolerance type EV (parallelism) between two elements of the type BV (machined face). The reference plane is indicated with 101 and the dependent plane with 104. In accordance with NEN 3310, understood under the parallelism tolerance of the plane 104 with respect to the reference plane 101 is the tolerance space defined by the distance 103 between two parallel planes 102 parallel to reference plane 101. To remain within the tolerance the plane 104 must lie within this tolerance space. The maximum permissible error angle is indicated by 105. It is simple to appreciate that irrespective of the direction in which the plane 104 extends slanting at an angle of the order of magnitude of the angle 105, this plane 104 always fits inside the tolerance space. The shown position, whereby the plane 104 extends slanting in the direction of the diagonal of a plane 102, is the position where two opposing angular points just touch the limits of the space. If the angle were to be greater than this maximum permissible angle the plane 104 would in this situation protrude outside the tolerance space. The shown angle 105 is therefore the maximum permissible error angle. It is not difficult to realise that this maximum permissible error angle can be calculated from the length and width of the plane 104 and the tolerance 103.

Shown by way of elucidation in figure 4b is the error angle in the case of a tolerance of the type PL (positional tolerance) of a relationship between two elements of the type BC. This tolerance corresponds with the positional tolerance of a line in more than one direction. In figure 4b the reference element is designated with 110 and the dependent element with 115. The prescribed position of the dependent element 115 is indicated with the centre line 111 which is located at an interval corresponding to the dimension 113 from the reference 110. The tolerance space is determined by the cylinder with the centre line 111 which lies on the prescribed position of the relevant line, whereby the axial line 112 is equal to the tolerance value. The dependent element 115, which represents for instance the centre line of a bore, can, in order to remain within the tolerance space, extend at the maximum permissible error angle 114. The maximum permissible error angle is simple to calculate from the length of the line 115 and the length of the tolerance 112. The tolerances of different types between the geometric elements of various types can thus be transformed into the maximum permissible error angle in the manner described here or one analogous thereto, whereby the algorithm to be used depends on the tolerance type and the type of geometric elements. These transformations can of course be performed in very suitable manner using a computer, and starting from the data included in the tables.

As already noted, according to the invention the relationships are subsequently ordered according to the size of the maximum permissible error angle. The relationship with the smallest permissible error angle is the most critical relationship and the greater the maximum permissible error angle is, the less critical the tolerance concerned is characterized as becoming.

After carrying out the above specified sorting process for the forming of groups, the fixation positions are determined.

In the case of the example of the pump housing described, which is to be machined on a machining device of the type in figure 6, only one group will result without further intervention. If the pump housing is fixed as seen in figure 1 with the left-hand side against the fixation plate, all operations can be performed in three directions, namely -X, +Z and -Z,.

As soon as this result emerges however, one skilled in the art will realise that this is no real solution since the fixation cannot take place sufficiently rigidly. In a further development of the method and device according to the invention the possibility is therefore included for the preclusion of fixation on particular sides of the workpiece. In the current example the directions precluded will be namely +X, -X and +Y, -Y.

Using these data and computations the embodiment of the invention described here produces a list of information for each fixation.

As will be apparent from the fixation lists shown below, two fixations are defined. In the first fixation the rough faces 61, 62 and 60 are defined as positioning faces on the workpiece, while in the second fixation the faces 22 and 33 are designated as positioning faces. It has thus been found that during the grouping the faces 22 and 33 are the reference elements on which the group of elements corresponding to the second fixation is characterized as being dependent.

| Fixation list | |
|---|---|
| Type of fixation<br>Prohibited basic direction(s)<br>Number of fixations<br>Fixation number<br>Direction base plate<br>Operating directions | : angle plate<br>: X, -X, Y, -Y<br>: 2<br>: 1<br>: -Z<br>: -X, Z |
| Advised positioning faces<br>+ positioning directions per face | : 3<br>: 61 (-Z), 62 (Y), 60 (-X) |
| Faces for machining<br>+ machining directions per face | : 16 |
| 1(Z ), 2(Z ), 3(Z ), 4(Z ), 5(Z ), 6(Z ) 7(Z ), 8(Z ), 9(Z ), 10(-X),<br>11(Z ), 22(Z ) 33(Z ), 34(Z ), 36(Z ), 38(-X) | |

| Fixation list | |
|---|---|
| Type of fixation<br>Prohibited basic direction(s)<br>Number of fixations<br>Fixation number<br>Direction base plate<br>Operating directions | : angle plate<br>: X, -X, Y, -Y<br>: 2<br>: 2<br>: Z<br>: -Z |
| Advised positioning faces<br>+ positioning directions per face | : 2<br>: 22 (Z), 33 (X, Y) |
| Faces for machining<br>+ machining directions per face | : 15 |
| 12(-Z ), 13(-Z ), 14(-Z ), 18(-Z ), 23(-Z ), 24(-Z ) 25(-Z ), 26(-Z ),<br>27(-Z ), 28(-Z ), 29(-Z ), 30(-Z ) 31( =Z ), 32(-Z ), 35(-Z ) | |

The result of the grouping is shown graphically in figure 5. Below the bottom dashed line are the rough faces which serve as positioning faces for the first fixation. Indicated between the two sets of dashed lines are the faces that are machined in the first fixation and above the top dashed line are the faces machined in the second fixation. The elements above the top dashed line thus form the group that is dependent on the elements 22 and 33 to be machined first. The group is likewise dependent on the plane of symmetry 37. Since this is an imaginary plane it is of course not used as positioning face for the fixation.

Figure 6 shows the first fixation of the workpiece. As illustrated the machining device is provided with a rotary table 122 onto which an angle plate 121 is mounted. Arranged on angle plate 121 is a fixation plate 120 comprising a matrix of mounting holes. The fixture arranged on fixation plate 120 is assembled from per se known clamping members. In accordance with a further development of the invention the computer also comprises a data file of all available clamping members and a sub-program which can design the necessary fixture from the different clamping members using the previously determined data with respect to the required fixations and this data file. As output via the output means can be given an instruction that comprises the clamping members to be arranged per position of the hole matrix. The final manufacture of the fixture can then be carried out by an almost untrained member of personnel. The software required can be written by any programmer skilled in the art.

TABLE 1

| GEOMETRIC TABLE | | | | | | | | | | | |
|---|---|---|---|---|---|---|---|---|---|---|---|
| SURFACE | TYPE | FIXATION POINT | | | LENGTH/AXIS | | | WIDTH/RADIUS | | | MACH.DIR |
| | | x | y | z | x | y | z | x | y | z | |
| 1 | BC | 44.43 | 11.91 | 0 | 0 | 0 | 68.00 | 4.5 | 0 | 0 | Z/-Z |
| 2 | BC | 23.00 | 39.84 | 0 | 0 | 0 | 68.00 | 4.5 | 0 | 0 | Z/-Z |
| 3 | BC | -23.00 | 39.84 | 0 | 0 | 0 | 68.00 | 4.5 | 0 | 0 | Z/-Z |
| 4 | BC | -44.43 | 11.91 | 0 | 0 | 0 | 68.00 | 4.5 | 0 | 0 | Z/-Z |
| 5 | BC | 44.43 | -73.91 | 0 | 0 | 0 | 68.00 | 4.5 | 0 | 0 | Z/-Z |
| 6 | BC | 23.00 | -101.84 | 0 | 0 | 0 | 68.00 | 4.5 | 0 | 0 | Z/-Z |
| 7 | BC | -23.00 | -101.84 | 0 | 0 | 0 | 68.00 | 4.5 | 0 | 0 | Z/-Z |
| 8 | BC | -44.43 | -73.91 | 0 | 0 | 0 | 68.00 | 4.5 | 0 | 0 | Z/-Z |
| 9 | BC | 0.00 | 0.00 | 59 | 0 | 0 | 27.20 | 19.0 | 0 | 0 | Z/-Z |
| 10 | BC | 65.00 | -31.00 | 26.9 | -13 | 0 | 0 | 0 | 20 | 0 | -X |
| 11 | BC | 0.00 | -62.00 | 59 | 0 | 0 | 27.20 | 19.0 | 0 | 0 | Z/-Z |
| 12 | BS | 33.70 | -16.44 | 86.2 | 0 | 0 | -21.00 | 3.0 | 0 | 0 | -Z |
| 13 | BS | -31.09 | -20.97 | 86.2 | 0 | 0 | -21.00 | 3.0 | 0 | 0 | -Z |
| 14 | BS | -2.62 | 37.41 | 86.2 | 0 | 0 | -21.00 | 3.0 | 0 | 0 | -Z |
| 18 | BV | -40.00 | 40.00 | 86.2 | 80 | 0 | 0 | 0 | -80 | 0 | -Z |
| 22 | BV | 56.00 | 56.00 | 0 | -112 | 0 | 0 | 0 | -174 | 0 | Z |
| 23 | BC | 0.00 | 0.00 | 91.0 | 0 | 0 | 0.01 | 30 | 0 | 0 | -Z |
| 24 | BC | 0.00 | -62.00 | 86.2 | 0 | 0 | 0.01 | 26 | 0 | 0 | -Z |
| 25 | BC | 44.43 | 11.91 | 68.0 | 0 | 0 | 0.01 | 11 | 0 | 0 | -Z |
| 26 | BC | 23.00 | 39.84 | 68.0 | 0 | 0 | 0.01 | 11 | 0 | 0 | -Z |
| 27 | BC | -23.00 | 39.84 | 68.0 | 0 | 0 | 0.01 | 11 | 0 | 0 | -Z |
| 28 | BC | -44.43 | 11.91 | 68.0 | 0 | 0 | 0.01 | 11 | 0 | 0 | -Z |
| 29 | BC | 44.43 | -73.91 | 71.0 | 0 | 0 | 0.01 | 11 | 0 | 0 | -Z |
| 30 | BC | 23.00 | -101.84 | 71.0 | 0 | 0 | 0.01 | 11 | 0 | 0 | -Z |
| 31 | BC | -23.00 | -101.84 | 71.0 | 0 | 0 | 0.01 | 11 | 0 | 0 | -Z |
| 32 | BC | -44.43 | -73.91 | 71.0 | 0 | 0 | 0.01 | 11 | 0 | 0 | -Z |
| 33 | BC | 0.00 | 0.00 | 0 | 0 | 0 | 59.00 | 35.89 | 0 | 0 | Z |
| 34 | BC | 0.00 | -62.00 | 0 | 0 | 0 | 59.00 | 35.89 | 0 | 0 | Z |
| 35 | BC | 0.00 | 0.00 | 86.2 | 0 | 0 | 0.01 | 25.0 | 0 | 0 | -Z |
| 36 | BV | -36.00 | 36.00 | 59.0 | 72 | 0 | 0 | 0 | -134 | 0 | Z |
| 37 | SV | 0.00 | 56.00 | 0. | 0 | -174 | 0 | 0 | 0 | 91 | |
| 38 | BC | 65.00 | -31.00 | 26.9 | 0.01 | 0 | 0 | 0 | 27 | 0 | -X |
| 60 | RV | 33.00 | 33.00 | 33.0 | 0 | 13 | 0 | 0 | 0 | 33 | -X |
| 61 | RV | 25.00 | -30.91 | 68.0 | 22 | 0 | 0 | 0 | -22 | 0 | -Z |
| 62 | RV | -4.00 | -118.00 | 0 | 8.0 | 0 | 0 | 0 | 0 | 62 | Y |
| 100 | WB | -110.00 | 60.00 | -5.0 | 180.0 | -180 | 0 | 0 | 0 | 110 | |

8

## TABLE 2

| DIMENSIONAL RELATIONSHIP TABLE | | | | | |
|---|---|---|---|---|---|
| Line | Dep. | Ref. | Tol.type | Dimension | Tolerance |
| 1 | 1 | 33 | PL | 46.000 | 0.400 |
| 2 | 1 | 37 | PL | 75.000 | 0.400 |
| 3 | 2 | 33 | PL | 46.000 | 0.400 |
| 4 | 2 | 37 | PL | 30.000 | 0.400 |
| 5 | 3 | 33 | PL | 46.000 | 0.400 |
| 6 | 3 | 37 | PL | 30.000 | 0.400 |
| 7 | 4 | 33 | PL | 46.000 | 0.400 |
| 8 | 4 | 37 | PL | 75.000 | 0.400 |
| 9 | 5 | 34 | PL | 46.000 | 0.400 |
| 10 | 5 | 37 | PL | 75.000 | 0.400 |
| 11 | 6 | 34 | PL | 46.000 | 0.400 |
| 12 | 6 | 37 | PL | 30.000 | 0.400 |
| 13 | 7 | 34 | PL | 46.000 | 0.400 |
| 14 | 7 | 37 | PL | 30.000 | 0.400 |
| 15 | 8 | 34 | PL | 46.000 | 0.400 |
| 16 | 8 | 37 | PL | 75.000 | 0.400 |
| 17 | 9 | 33 | CC | | 0.020 |
| 18 | 9 | 22 | HA | | 0.020 |
| 19 | 10 | 22 | MA | 26.900 | 0.300 |
| 20 | 10 | 22 | EV | | 0.200 |
| 21 | 11 | 22 | HA | | 0.020 |
| 22 | 11 | 34 | CC | | 0.020 |
| 23 | 12 | 33 | PL | 37.500 | 0.400 |
| 24 | 12 | 37 | PL | 124.000 | 0.400 |
| 25 | 13 | 33 | PL | 37.500 | 0.400 |
| 26 | 13 | 37 | PL | 4.000 | 0.400 |
| 27 | 14 | 33 | PL | 37.500 | 0.400 |
| 28 | 14 | 37 | PL | 244.000 | 0.400 |
| 29 | 18 | 22 | MA | 86.250 | 0.250 |
| 30 | 22 | 61 | EV | | 0.400 |
| 31 | 23 | 22 | MA | 91.000 | 0.300 |
| 32 | 24 | 22 | MA | 85.950 | 0.250 |
| 33 | 25 | 22 | MA | 68.000 | 0.300 |
| 34 | 26 | 22 | MA | 68.000 | 0.300 |
| 35 | 27 | 22 | MA | 68.000 | 0.300 |
| 36 | 28 | 22 | MA | 68.000 | 0.300 |
| 37 | 29 | 22 | MA | 68.000 | 0.300 |
| 38 | 30 | 22 | MA | 68.000 | 0.300 |
| 39 | 31 | 22 | MA | 68.000 | 0.300 |
| 40 | 32 | 22 | MA | 68.000 | 0.300 |
| 41 | 33 | 37 | MA | 0.000 | 0.300 |
| 42 | 33 | 62 | MA | 119.000 | 1.000 |
| 43 | 33 | 22 | HA | | 0.020 |
| 44 | 34 | 22 | HA | | 0.020 |
| 45 | 34 | 33 | MA | 62.000 | 0.020 |
| 46 | 34 | 37 | MA | 0.000 | 0.300 |
| 47 | 35 | 23 | MA | 5.000 | 0.100 |
| 48 | 36 | 22 | EV | | 0.020 |
| 49 | 37 | 60 | MA | 33.000 | 0.300 |
| 50 | 37 | 60 | EV | | 0.300 |
| 51 | 38 | 37 | MA | 65.000 | 0.200 |

## Claims

1. Method for clamping a semi-manufacture onto a fixation surface of a machining device for machining into a product, comprising:
- determining of the required operations, starting from the working drawing of the product;
- determining of the relationships of the machining directions of the particular machining device, whereby each relationship is the mutual relation of the machining directions possible with the machining device in one fixation position at a time relative to the fixation surface;
- determining hereby of the fixations necessary for performing the machining operations;
- designing of a fixture for each fixation;
- subsequent arrangement for each fixation of the fixture on the fixation surface and the clamping of the semi-manufacture on said fixture,
**characterized in that** the determining of the necessary fixations comprises:
- the characterizing of the geometric elements of the product essential for the machining operations, using the working drawing as starting point;
- the determining with respect to the product of the machining directions of the operations associated with the elements;
- the establishing of the positional relationships and form relationships between pairs of geometric elements whereby each pair comprises a reference element and an element dependent thereon in accordance with the relationship;
- the establishing of the tolerances of the relationships;
- the grouping of elements of which the relationships have the most critical tolerances and in so far as the differing machining directions thereof are consistent in each case with a relationship of the machining directions of the machining device;
- the addition to each group of elements with compatible machining directions,
- whereby each resulting group is related to one fixation, such that the operations associated with the elements of one group can be performed in one fixation.

2. Method as claimed in claim 1, **characterized in that** the grouping of the elements comprises:
- the ordering of the pairs of elements in accordance with decreasing criticality of the tolerance of their relationship;
- the initial inclusion in a separate group of each pair, and subsequently,
- the addition, in the order sequence, of a following group to a preceding group if the element of a pair in said following group that represents the reference element already forms part of said preceding group and the combination of the machining directions of the operations associated with the elements in said preceding and said following group is compatible with a relationship of the machining directions of the machining device;
- the removal, in the case the following group is not added to the preceding group by reason of incompatibility of the machining directions, from said following group of the relevant reference element and the characterizing of said following group as dependent group, that is, as group dependent on the relevant reference element;
- the combining of dependent groups of which the reference elements form part of the same group, if the combination of the machining directions of the operations associated with the elements of these dependent groups is consistent with a relationship of the machining directions of the machining device;
- whereby each reference element on which a dependent group is dependent serves as positioning element in the fixation to which this dependent group is related.

3. Method as claimed in claim 1 or 2, **characterized in that** prior to the grouping of the elements the tolerance of each relationship is transformed into the maximum permissible error angle between the nominal machining directions of the operations associated with the elements of the pair, thereby remaining just within the tolerance.

4. Device for performing the method as claimed in any of the foregoing claims, comprising a per se known computer with input means for input of data of the geometric elements, a program memory containing a program for determining with the method from any of the claims 1-3 of the required fixations, output means for output of data representing the necessary fixations, means for manufacturing a fixture with this data and means for arranging said fixture on a fixation surface of a machining device and the fixation of a semi-manufacture on said fixture.

5. Device as claimed in claim 4, **characterized in that** the means for manufacturing a fixture comprise a fixation plate to be arranged on the fixation surface and having a matrix of mounting holes and a collection of clamping members which can be assembled into fixture parts and mounted on said fixation plate, whereby the computer memory contains a data file of the clamping members and a sub-program that outputs via the output means an instruction containing the clamping members to be arranged per position of said hole matrix.

6. Device as claimed in claim 5, **characterized in that** the collection of clamping members contains machinable members that after mounting of the fixture on the fixation surface are machined to the required size by the machining device.

FIG.1

FIG.2

FIG.3

FIG.5

FIG.4 A

FIG.4B

FIG.6

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | N.O. OLESTEN: "Numerical Control", 1970, pages 526-544, John Wiley & Sons, New York, US; * Page 527, lines 23-38; page 529, line 34 - page 532, line 15; figures 12.2,12.3,12.6,12.7 * | 1,5 | G 05 B 19/18<br>G 06 F 15/20<br>G 06 F 15/60 |
| A | IEEE JOURNAL OF ROBOTICS AND AUTOMATION, vol. RA-1, no. 2, June 1985, pages 86-94, IEEE, New York, US; H. ASADA et al.: "Kinematic analysis of workpart fixturing for flexible assembly with automatically reconfigurable fixtures" * Page 87, column 1, lines 13-17; page 87, column 2, lines 7-17; figure 2 * | 1,4 | |
| A | PROCEEDINGS OF THE IEEE 1986 NATIONAL AEROSPACE AND ELECTRONICS CONFERENCE, Dayton Convention Center, 19th-23rd May 1986, vol. 2, pages 522-532, IEEE, New York, US; T.R. KRAMER: "Integrated automated manufacture of metal parts" * Page 524, column 2, lines 1-43; table 1 * | 1,4 | |
| A | V.D.I.-ZEITSCHRIFT, vol. 127, no. 1/2, January 1985, pages 28-32, Dusseldorf, DE; H.E. HELLWIG et al.: "Die Kopplung und die Integration von CAD und CAM" * Page 30, column 2, line 4 - page 31, column 3, line 8; figures 7,10 * | 1,4 | |

**TECHNICAL FIELDS SEARCHED (Int. Cl.4)**

G 06 F 15/60
G 06 F 15/20
G 05 B 19/18

The present search report has been drawn up for all claims

| Place of search | Date of completion of the search | Examiner |
|---|---|---|
| THE HAGUE | 06-09-1988 | GUINGALE A. |

EPO FORM 1503 03.82 (P0401)